# EUROPEAN PATENT SPECIFICATION

(11) **EP 2 126 303 B1**
(45) Date of publication and mention of the grant of the patent: **05.12.2012**
(21) Application number: 08742337.2
(22) Date of filing: 27.03.2008
(51) Int. Cl.: F01N 3/32, F01N 3/22

(54) **CURRENT LIMITING DRIVER FOR ELECTRIC AIR PUMP**
STROMSPARENDER ANTRIEB FÜR EINE ELEKTRISCHE LUFTPUMPE
DISPOSITIF D'ENTRAÎNEMENT DE LIMITATION DE COURANT POUR POMPE À AIR ÉLECTRIQUE

(30) Priority: 27.03.2007 US 920161 P
(43) Date of publication of application: 02.12.2009
(73) Proprietor: BorgWarner Inc., Auburn Hills, MI 48326 (US)
(72) Inventor: LISKE, Kevin, R., Sterling Heights, MI 48310 (US); KAITSCHUCK, David, Commerce Township, MI 48382 (US); PETERSON, Todd, R., New Boston, MI 48164 (US)
(74) Representative: Schmitz, Hans-Werner
(86) International application number: PCT/US2008/004040
(87) International publication number: WO 2008/118492

(56) References cited:
- JP-A- 7 150 930
- JP-A- 10 252 448
- JP-A- 2008 114 698
- KR-B1- 100 245 853
- US-A- 5 456 063
- US-A1- 2004 168 440
- US-A1- 2005 217 267

## Description

### CROSS-REFERENCE TO RELATED APPLICATIONS

This application is a PCT International Application which claims the benefit of U.S. Provisional Application No. 60/920, 161, filed March 27, 2007. The disclosure of the above application is incorporated herein by reference.

### FIELD OF THE INVENTION

The present invention relates to a current limiting arrangement for a vehicle secondary air supply system.

### BACKGROUND OF THE INVENTION

When an engine goes through a cold start condition a secondary air supply device can be used to inject air into the engine's exhaust manifold. This allows oxygen to be introduced to the exhaust and cause excess hydrocarbons to be combusted. This also helps the catalytic converter achieve optimal temperature in a shorter amount of time.

Using secondary air supply devices can cause electric current surges into an actuator of an air pump when the actuator is initially energized from the cold start condition. This power surge is known as in-rush current. A surge of in-rush current into the actuator can cause undesirable conditions in the vehicle electrical system. Therefore, it is desirable to develop a current limiting arrangement wherein the actuator of the secondary air supply device is operably connected to a pulse width modulated controller to control the in-rush current.

US 5,456,063 discloses an apparatus for supplying the secondary air to a catalyst in an exhaust gas passage is disclosed. An electric heater is fixed to the catalyst to which the secondary air is supplied by an electric air pump. The heater and the air pump are connected with a battery through relay contacts, respectively. During the cold operation of the engine, an electric control unit switches on/off the relay contacts, so as to actuate the air pump prior to the heater and stop the air pump after the heater. The secondary air is supplied to the catalyst when the temperature of catalyst is raised up to the activating point. US 5,456,063 discloses an arrangement according to the preamble part of claim 1.

JP 7150930 A discloses a duty controller of electricmotor and exhaust emission control device of diesel engine. Thereby, a filter and an electric heater are provided on an exhaust system of a diesel engine, and an electrically powered air pump supplies secondary air to the filter. An ECU is provided with a microcomputer for outputting a low-frequency duty signal as a driving signal of an electric motor of the electrically powered air pump, a high frequency generating circuit for outputting a high-frequency pulse signal, and an AND gate for outputting a signal by taking the logical product of the signal of the high frequency generating circuit and the signal of the microcomputer. The microcomputer ignites particulates collected by the filter in an electric heater and also incinerates particulates collected by the filter by driving the electric motor, so as to regenerate the filter.

### SUMMARY OF THE INVENTION

Arrangements according to the present invention are disclosed in the independent claims. The dependent claims contain further preferred developments of the invention. The present invention relates to a secondary air supply arrangement having an actuator operably connected to an air pump for creating air flow between an inlet and outlet of the air pump. A pulse width modulated controller is operably connected to the actuator for applying a pulse width modulated voltage to the actuator. The pulse width modulated controller controls the initial in-rush electric current when the actuator is activated.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a perspective view of the secondary air supply arrangement having the pulse width modulated controller connected remotely;
Figure 2 is a perspective view of the secondary air supply arrangement having the pulse width modulated controller mounted to the air pump;
Figure 3 is an exploded view of the secondary air supply arrangement having the pulse width modulated controller integrated within the actuator;
Figure 4 is a schematic diagram showing a current limiting arrangement;
Figure 5a is a line graph illustrating the implications of in-rush current when no pulse width modulation is applied; and
Figure 5b is a line graph showing the current controlled when the actuator of the secondary air supply arrangement is operably connected to the pulse width modulated controller.

### DETAILED DESCRIPTION OF THE PREFERRED EMBODIMENTS

The following description of the preferred embodiment(s) is merely exemplary in nature and is in no way intended to limit the invention, its application, or uses.

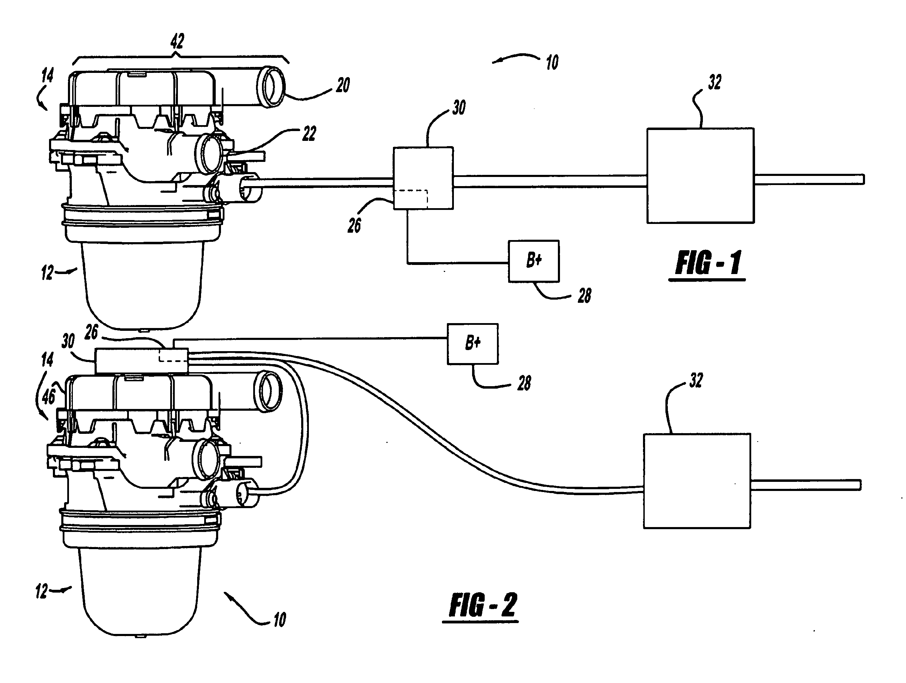

Referring generally to Figures 1-4 a secondary air supply arrangement is generally shown at 10 wherein the actuator generally shown at 12 receives electric current and is operably connected to the air pump generally shown at 14. The actuator 12 is covered by a casing 16 that is connected to a housing 18 of the air pump 14. The air pump 14 has an inlet 20 and an outlet 22 in which the air flows in and out of the air pump 14 respectfully.

The actuator 12 energizes the air pump 14 causing an impeller 24 to rotate and cause air to flow through the inlet 20 and outlet 22. It is understood, however, that a pumping fan or other mechanism can be used as an alternative to the impeller 24.

The pulse width modulated controller 26 is connected to a battery 28 and receives energy from the battery 28. It is understood, however, that any conventional energy source can be used. The pulse width modulated controller 26 is operably connected to the actuator 12 and controls the amount of voltage applied to the actuator 12. The air flow generated by the air pump 14 corresponds with the amount of voltage applied to the actuator 12 by the pulse width modulated controller 26. The in-rush current experienced by the actuator 12 can be controlled to be less than or equal to 150 amps. when the actuator 12 is initially activated. However, the current range can vary depending on the needs of a particular application.

A pump relay 30 is coupled to or integrated with the pulse width modulated controller 26 and operably connected to the actuator 12. The pump relay 30 receives a signal from an electronic control unit 32 and acts as an on/off switch for allowing the application of voltage and flow of current to the actuator 12. However, it is not necessary for the pump relay 30 to be present for the pulse width modulated controller 26 to control the amount of voltage applied to the actuator 12.

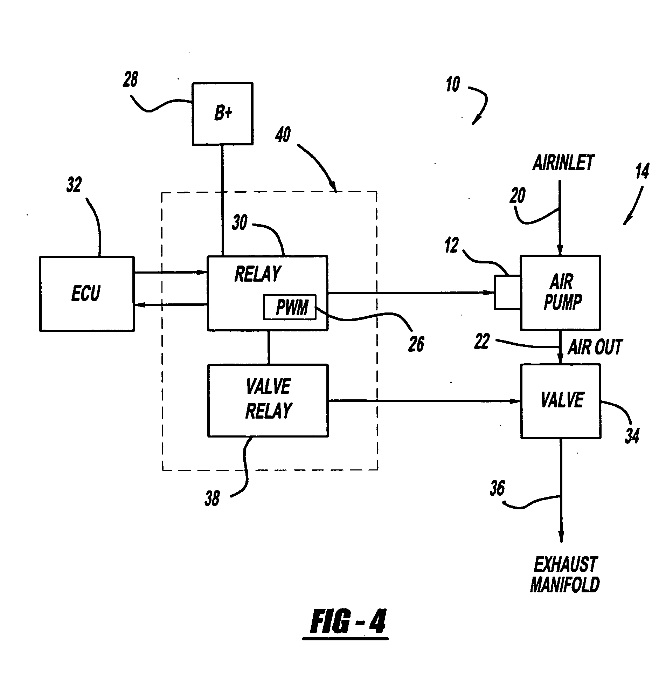

A valve 34, as shown in Figure 4, is operably connected to the outlet 22 of the air pump 14 for controlling the flow of air to the engine's exhaust manifold 36. A valve relay 38 is operably connected to the valve 34 and acts as an on/off switch to energize the valve 34. The valve relay 38 can be coupled to the pulse width modulated controller 26 and the pump relay 30, generally shown at 40, however, the valve relay 38 controls the activation of the valve 34.

Referring to Figure 1, one secondary air supply arrangement 10 includes the pulse width modulated controller 26 located remotely from a secondary air supply device 42. Electric current from the battery 28 flows through a connection to the pulse width modulated controller 26. The pulse width modulated controller 26 applies a pulse width modulated voltage to the actuator 12 either through the pump relay 30 or directly. The actuator 12 energizes the air pump 14 causing air to flow through the inlet 20 and outlet 22 respectfully.

The pulse width modulated controller 26 and the pump relay 30 can alternatively be coupled to or integrated with the electronic control unit 32 located remotely from the secondary air supply device 42. The pulse width modulated controller 26 applies a pulse width modulated voltage to the actuator 12 either through the pump relay 30 or directly.

Referring to Figure 2, an alternative secondary air supply arrangement 10 includes the pulse width modulated controller 26 as a solid state device connected on a top of a cover 46 of the air pump 14. However, it is understood that the pulse width modulated controller 26 can be connected anywhere on the outside of the secondary air supply arrangement 10. Electric current from the battery 28 flows through a connection to the pulse width modulated controller 26. The pulse width modulated controller 26 applies a pulse width modulated voltage to the actuator 12 either through the pump relay 30 or directly.

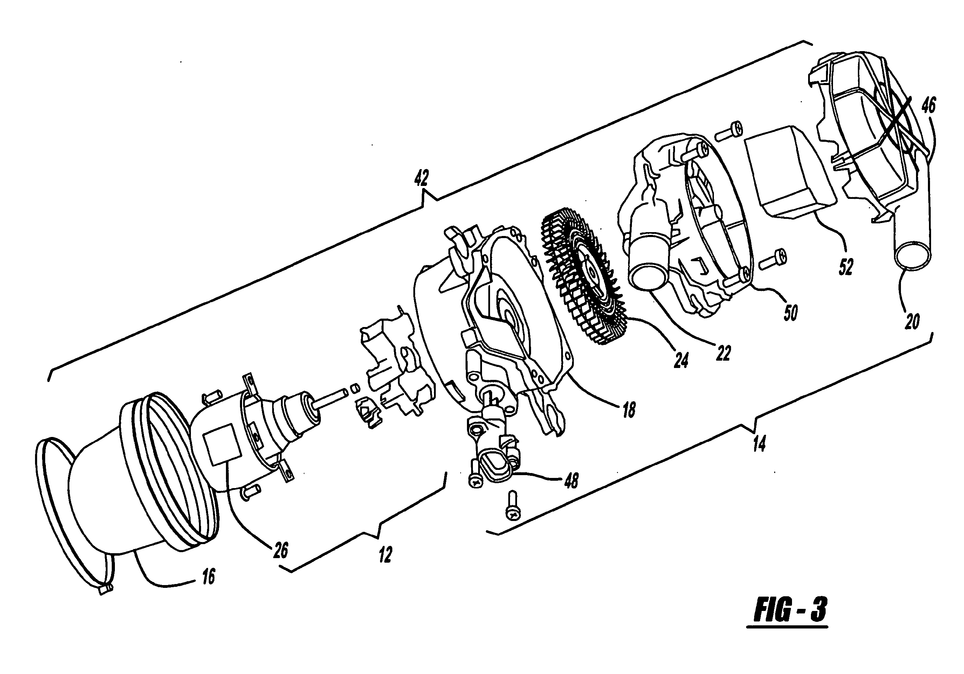

Referring to Figure 3, yet another alternative of the secondary air supply arrangement 10 is shown, wherein the pulse width modulated controller 26 is coupled to or integrated with the actuator 12. However, it is understood that the pulse width modulated controller 26 can be integrated anywhere within the secondary air supply device 42. The actuator 12 is operably connected to the air pump 14 for creating air flow between the inlet 20 and outlet 22 of the air pump 14. The housing 18 of the air pump 14 houses the impeller 24 and includes an electrical port 48. A lower flow chamber 50, having the outlet 22, is connected to the housing 18 and houses a particulate filter 52. The cover 46, having the inlet 20, is connected to the lower flow chamber 50. Air flows in and out of the inlet 20 and the outlet 22 of the air pump 14 respectfully.

The battery delivers electric current through the electrical port 48 to the pulse width modulated controller 26. The pulse width modulated controller 26 is operably connected to the actuator 12 and directly controls the voltage applied to the actuator 12. However, it is understood that the pump relay can be coupled to or integrated with the pulse width modulated controller 26, wherein the pulse width modulated controller 26 applies a pulse width modulated voltage to the actuator 12 through the pump relay.

Referring to Figure 4, a schematic diagram of a secondary air supply arrangement 10 having the valve relay 38 is shown. Electric current commanded by the electronic control unit 32 flows through the connection to the pump relay 30 that is coupled to or integrated with the pulse width modulated controller 26. The pulse width modulated controller 26 applies a pulse width modulated voltage to the actuator generally shown at 12 either through the pump relay 30 or directly. The actuator 12 energizes the air pump generally shown at 14 causing the impeller to rotate and cause air to flow through the inlet 20 and the outlet 22 respectfully. A valve relay 38 is operably connected to the valve 34 and acts as an on/off switch to energize the valve 34 and control the air flow to the engine's exhaust manifold 36. The valve relay 38 can be coupled to the pulse width modulated controller 26 and the pump relay 30, generally shown at 40, however, the valve relay 38 controls the activation of the valve 34.

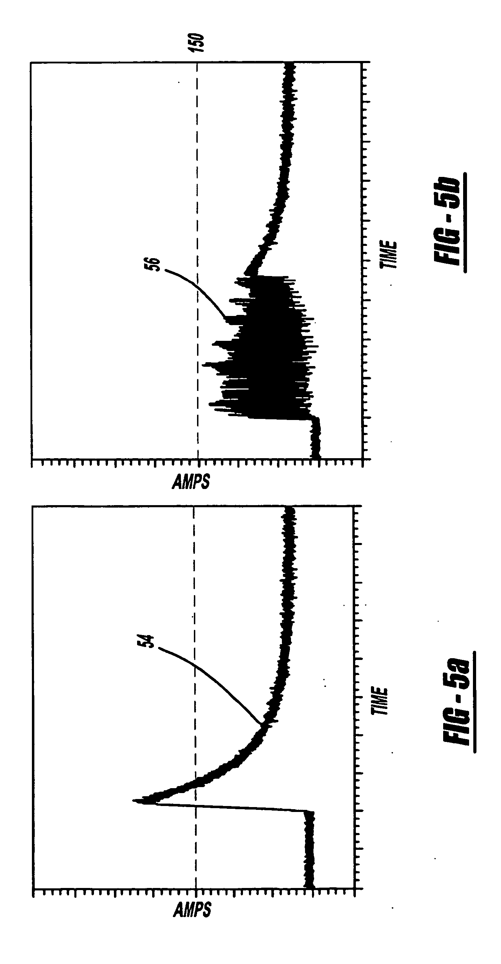

Referring to Figure 5a, the graph illustrates the in-rush current developed due to activation of the air pump when it is initially activated at the engine's cold start condition until full flow is achieved. A Line 54 depicts the unfavorable condition of the in-rush current exceeding 150 amps, and the pulse width modulated controller is not in use.

Referring to Figure 5b, Line 56 depicts the in-rush current controlled to less than or equal to 150 amps, when the pulse width modulated controller is used to apply a pulse width modulated voltage to the actuator of the secondary air supply device. The in-rush current can be controlled to be less than or equal to 150 amps. When the actuator is initially energize, however, the specific amperes can vary depending on the needs of a particular application.

## Claims

1. A secondary air supply arrangement (10) comprising:
an air pump (14) operable to create air flow between an inlet (20) and an outlet (22) of said air pump; and
an actuator (12) operable to energize said air pump; a pulse width modulated controller (26) operably connected to said actuator for applying a pulse width modulated voltage to said actuator, wherein an initial in-rush electric current is controlled when said actuator is activated,
**characterized by**
a valve (34) operably connected to said outlet of said air pump;
a valve relay (38) coupled to said pulse width modulated controller and said pump relay, wherein said valve relay controls the activation of said valve.

2. The secondary air supply arrangement of claim 1 wherein said pulse width modulated controller is mounted to said air pump.

3. The secondary air supply arrangement of claim 1 further comprising a pump relay (30) coupled to said pulse width modulated controller, wherein said pump relay switches a voltage to said actuator.

4. The secondary air supply arrangement of claim 1 wherein said pulse width modulated controller is a solid state device.

5. The secondary air supply arrangement of claim 1 wherein said in-rush electric current is preferably limited to less than or equal to 150 amps.

6. The secondary air supply arrangement of claim 1 wherein voltage applied by said pulse width modulated controller is commanded by an electronic control unit (32).

7. A current limiting arrangement comprising;
an electronic control unit (32);
a pump relay (30) connected to said electronic control unit;
a pulse width modulated controller (26) connected to said pump relay;
wherein an initial in-rush electric current is controlled when said actuator is activated;
a battery (28) connected to said pulse width modulated controller;
an air pump (14), wherein said air pump is energized by an actuator (12);
a valve relay (38) coupled to said pump relay and said pulse width modulator controller; and
a valve (34) operably connected to said valve relay.

8. The current limiting arrangement of claim 7 wherein said pulse width modulated controller is a solid state device.

9. The current limiting arrangement of claim 7 wherein said pulse width modulated controller is mounted to a top of said air pump.

10. The current limiting arrangement of claim 7 wherein said pulse width modulated controller is integrated into said actuator.

11. The current limiting arrangement of claim 7 wherein said pulse width modulated controller applies a pulse width modulated voltage to said actuator.

12. The current limiting arrangement of claim 7 wherein said in-rush electric current is preferably limited to less than or equal to 150 amps.

13. The current limiting arrangement of claim 7 wherein said valve relay variably controls a position of said valve.

14. A secondary air supply arrangement comprising;
an air pump (14) operable to create air flow between an inlet (20) and an outlet (22) of said air pump;
an actuator (12) operable to energize said air pump;
a pulse width modulated controller (26) operably connected to said actuator for applying a pulse width modulated voltage to said actuator, said pulse width modulated controller being a solid state device, wherein an initial in-rush electric current is controlled when said actuator is activated;
a pump relay (30) operably connected to said pulse width modulated controller,
wherein an electronic control unit (32) commands said pump relay and said pump relay switches electric flow to said actuator;
a valve (34) operably connected to said outlet of said air pump for controlling the flow of air to an engine's exhaust manifold ; and
a valve relay (38) coupled to said pulse width modulated controller and said pump relay, wherein said valve relay controls the activation of said valve.

15. The secondary air supply arrangement of claim 14 wherein said pulse width modulated controller is coupled to or integrated with said actuator.

16. The secondary air supply arrangement of claim 14 wherein said pulse width modulated controller is coupled to or integrated with said air pump.

17. The secondary air supply arrangement of claim 14 wherein said in-rush electric current is preferably limited to less than or equal to 150 amps.

## Patentansprüche

1. Sekundäre Luftversorgungsanordnung (10), aufweisend:
eine Luftpumpe (14), die so betrieben werden kann, dass sie einen Luftstrom zwischen einem Einlass (20) und einem Auslass (22) der Luftpumpe erzeugt; und
ein Stellglied (12), das so betrieben werden kann, dass es die Luftpumpe ansteuert;
eine impulsbreitenmodulierte Steuerung (26), die funktionell mit dem Stellglied verbunden ist, zum Anlegen einer impulsbreitenmodulierten Spannung an das Stellglied, wobei ein anfänglicher elektrischer Einschaltstrom geregelt wird, wenn das Stellglied aktiviert wird,
**gekennzeichnet durch**
ein Ventil (34), das funktionell mit dem Auslass der Luftpumpe verbunden ist;
ein Ventilrelais (38), das mit der impulsbreitenmodulierten Schaltung und dem Pumpenrelais gekoppelt ist, wobei das Ventilrelais die Aktivierung des Ventils steuert.

2. Sekundäre Luftversorgungsanordnung nach Anspruch 1, wobei die impulsbreitenmodulierte Steuerung an der Luftpumpe montiert ist.

3. Sekundäre Luftversorgungsanordnung nach Anspruch 1, ferner aufweisend ein Pumpenrelais (30), das mit der impulsbreitenmodulierten Steuerung gekoppelt ist, wobei das Pumpenrelais eine Spannung zum Stellglied schaltet.

4. Sekundäre Luftversorgungsanordnung nach Anspruch 1, wobei die impulsbreitenmodulierte Steuerung ein Festkörperbauelement ist.

5. Sekundäre Luftversorgungsanordnung nach Anspruch 1, wobei der elektrische Einschaltstrom vorzugsweise auf weniger als oder gleich 150 A begrenzt ist.

6. Sekundäre Luftversorgungsanordnung nach Anspruch 1, wobei Spannung, die durch die impulsbreitenmodulierte Steuerung angelegt wird, von einer elektronischen Steuereinheit (32) gesteuert wird.

7. Stromsparanordnung, aufweisend:
eine elektronische Steuereinheit (32);
ein Pumpenrelais (30), das mit der elektronischen Steuereinheit verbunden ist;
eine impulsbreitenmodulierte Steuerung (26), die mit dem Pumpenrelais verbunden ist;
wobei ein anfänglicher elektrischer Einschaltstrom geregelt wird, wenn das Stellglied aktiviert wird;
eine Batterie (28), die mit der impulsbreitenmodulierten Steuerung verbunden ist;
eine Luftpumpe (14), wobei die Luftpumpe durch ein Stellglied (12) angesteuert wird;
ein Ventilrelais (38), das mit dem Pumpenrelais und der impulsbreitenmodulierten Steuerung gekoppelt ist; und
ein Ventil (34), das funktionell mit dem Ventilrelais verbunden ist.

8. Stromsparanordnung nach Anspruch 7, wobei die impulsbreitenmodulierte Steuerung ein Festkörperbauelement ist.

9. Stromsparanordnung nach Anspruch 7, wobei die impulsbreitenmodulierte Steuerung an einer Oberseite der Luftpumpe montiert ist.

10. Stromsparanordnung nach Anspruch 7, wobei die impulsbreitenmodulierte Steuerung in das Stellglied integriert ist.

11. Stromsparanordnung nach Anspruch 7, wobei die impulsbreitenmodulierte Steuerung eine impulsbreitenmodulierte Spannung an das Stellglied anlegt.

12. Stromsparanordnung nach Anspruch 7, wobei der elektrische Einschaltstrom vorzugsweise auf weniger als oder gleich 150 A begrenzt ist.

13. Stromsparanordnung nach Anspruch 7, wobei das Ventilrelais eine Position des Ventils veränderlich steuert.

14. Sekundäre Luftversorgungsanordnung, aufweisend:
eine Luftpumpe (14), die so betrieben werden kann, dass sie einen Luftstrom zwischen einem Einlass (20) und einem Auslass (22) der Luftpumpe erzeugt;
ein Stellglied (12), das so betrieben werden kann, dass es die Luftpumpe ansteuert;
eine impulsbreitenmodulierte Steuerung (26), die funktionell mit dem Stellglied verbunden ist, zum Anlegen einer impulsbreitenmodulierten Spannung an das Stellglied, wobei die impulsbreitenmodulierte Steuerung ein Festkörperbauelement ist, wobei ein anfänglicher elektrischer Einschaltstrom geregelt wird, wenn das Stellglied aktiviert wird;
ein Pumpenrelais (30), das funktionell mit der impulsbreitenmodulierten Steuerung verbunden ist,
wobei eine elektronische Steuereinheit (32) das Pumpenrelais steuert, und das Pumpenrelais elektrischen Fluss zum Stellglied schaltet;
ein Ventil (34), das funktionell mit dem Auslass der Luftpumpe verbunden ist, zum Steuern des Luftstroms zu einem Abgaskrümmer eines Motors; und
ein Ventilrelais (38), das mit der impulsbreitenmodulierten Steuerung und dem Pumpenrelais gekoppelt ist, wobei das Ventilrelais die Aktivierung des Ventils steuert.

15. Sekundäre Luftversorgungsanordnung nach Anspruch 14, wobei die impulsbreitenmodulierte Steuerung mit dem Stellglied gekoppelt oder darin integriert ist.

16. Sekundäre Luftversorgungsanordnung nach Anspruch 14, wobei die impulsbreitenmodulierte Steuerung mit der Luftpumpe gekoppelt oder darin integriert ist.

17. Sekundäre Luftversorgungsanordnung nach Anspruch 14, wobei der elektrische Einschaltstrom vorzugsweise auf weniger als oder gleich 150 A begrenzt ist.

## Revendications

1. Dispositif d'alimentation en air secondaire (10) comprenant :
une pompe à air (14) pouvant être utilisée pour créer un écoulement d'air entre un orifice d'entrée (20) et un orifice de refoulement (22) de ladite pompe à air ; et
un actionneur (12) pouvant être utilisé pour mettre ladite pompe à air sous tension ;
un contrôleur à modulation de largeur d'impulsion (26) connecté de manière opérationnelle audit actionneur pour appliquer une tension à modulation de largeur d'impulsion sur ledit actionneur, un appel initial de courant électrique étant commandé lorsque ledit actionneur est activé,
**caractérisé par**
une soupape (34) reliée de manière opérationnelle audit orifice de refoulement de ladite pompe à air;
un relais de soupape (38) couplé audit contrôleur à modulation de largeur d'impulsion et audit relais de pompe, ledit relais de soupape commandant l'activation de ladite soupape.

2. Dispositif d'alimentation en air secondaire selon la revendication 1, dans lequel ledit contrôleur à modulation de largeur d'impulsion est monté sur ladite pompe à air.

3. Dispositif d'alimentation en air secondaire selon la revendication 1, comprenant en outre un relais de pompe (30) couplé audit contrôleur à modulation de largeur d'impulsion, ledit relais de pompe commutant une tension sur ledit actionneur.

4. Dispositif d'alimentation en air secondaire selon la revendication 1, dans lequel ledit contrôleur à modulation de largeur d'impulsion est un dispositif à corps solide.

5. Dispositif d'alimentation en air secondaire selon la revendication 1, dans lequel ledit appel de courant électrique est limité de préférence à un courant inférieur ou égal à 150 A.

6. Dispositif d'alimentation en air secondaire selon la revendication 1, dans lequel la tension appliquée par ledit contrôleur à modulation de largeur d'impulsion est commandée par une unité de commande électronique (32).

7. Dispositif de limitation de courant comprenant :
une unité de commande électronique (32) ;
un relais de pompe (30) connecté à ladite unité de commande électronique ;
un contrôleur à modulation de largeur d'impulsion (26) connecté audit relais de pompe ;
dans lequel un appel initial de courant électrique est commandé lorsque ledit actionneur est activé ;
une batterie (28) connectée audit contrôleur à modulation de largeur d'impulsion ;
une pompe à air (14), ladite pompe à air étant mise sous tension par un actionneur (12) ;
un relais de soupape (38), couplé audit relais de pompe et audit contrôleur à modulation de largeur d'impulsion ; et
une soupape (34) connectée de manière opérationnelle audit relais de soupape.

8. Dispositif de limitation de courant selon la revendication 7, dans lequel ledit contrôleur à modulation de largeur d'impulsion est un dispositif à corps solide.

9. Dispositif de limitation de courant selon la revendication 7, dans lequel ledit contrôleur à modulation de largeur d'impulsion est monté sur un sommet de ladite pompe à air.

10. Dispositif de limitation de courant selon la revendication 7, dans lequel ledit contrôleur à modulation de largeur d'impulsion est intégré dans ledit actionneur.

11. Dispositif de limitation de courant selon la revendication 7, dans lequel ledit contrôleur à modulation de largeur d'impulsion applique une tension à modulation de largeur d'impulsion sur ledit actionneur.

12. Dispositif de limitation de courant selon la revendication 7, dans lequel ledit appel de courant électrique est limité de préférence à un courant inférieur ou égal à 150 A.

13. Dispositif de limitation de courant selon la revendication 7, dans lequel ledit relais de soupape commande de manière variable une position de ladite soupape.

14. Dispositif d'alimentation en air secondaire comprenant :
une pompe à air (14) pouvant être utilisée pour créer un écoulement d'air entre un orifice d'entrée (20) et un orifice de refoulement (22) de ladite pompe à air ;
un actionneur (12) pouvant être utilisé pour mettre ladite pompe à air sous tension ;
un contrôleur à modulation de largeur d'impulsion (26) connecté de manière opérationnelle audit actionneur pour appliquer une tension à modulation de largeur d'impulsion sur ledit actionneur, ledit contrôleur à modulation de largeur d'impulsion étant un dispositif à corps solide, un appel initial de courant électrique étant commandé lorsque ledit actionneur est activé ;
un relais de soupape (30), connecté de manière opérationnelle audit contrôleur à modulation de largeur d'impulsion,
dans lequel une unité de commande électronique (32) commande ledit relais de pompe et ledit relais de pompe commute un flux de courant électrique vers l'actionneur ;
une soupape (34) reliée de manière opérationnelle audit orifice de refoulement de ladite pompe à air pour contrôler l'écoulement d'air vers un collecteur d'échappement d'un moteur ; et
un relais de soupape (38) couplé audit contrôleur à modulation de largeur d'impulsion et audit relais de pompe, ledit relais de soupape commandant l'activation de ladite soupape.

15. Dispositif d'alimentation en air secondaire selon la revendication 14, dans lequel ledit contrôleur à modulation de largeur d'impulsion est couplé audit actionneur ou est intégré à celui-ci.

16. Dispositif d'alimentation en air secondaire selon la revendication 14, dans lequel ledit contrôleur à modulation de largeur d'impulsion est couplé à ladite pompe à air ou est intégré à celle-ci.

17. Dispositif d'alimentation en air secondaire selon la revendication 14, dans lequel ledit appel de courant électrique est limité de préférence à un courant inférieur ou égal à 150 A.
